# EUROPÄISCHE PATENTSCHRIFT

(11) **EP 2 255 113 B1**
(45) Veröffentlichungstag und Bekanntmachung des Hinweises auf die Patenterteilung: **18.07.2012**
(21) Anmeldenummer: 08734851.2
(22) Anmeldetag: 28.03.2008
(51) Int. Cl.: F16K 27/00, F15B 13/08

(54) **FLUIDTECHNISCHES GERÄT**
FLUIDIC DEVICE
APPAREIL DE TECHNIQUE DES FLUIDES

(43) Veröffentlichungstag der Anmeldung: 01.12.2010
(73) Patentinhaber: FESTO AG & Co. KG, 73734 Esslingen (DE)
(72) Erfinder: MACK, Reinhold, 73773 Aichwald (DE)
(74) Vertreter: Vogler, Bernd
(86) Internationale Anmeldenummer: PCT/EP2008/002478
(87) Internationale Veröffentlichungsnummer: WO 2009/118030

(56) Entgegenhaltungen:
- EP-A- 0 678 676
- EP-A- 1 026 430
- DE-A1-102006 017 181
- DE-U1- 9 010 263
- US-A1- 2003 056 840

## Beschreibung

Die Erfindung betrifft ein fluidtechnisches Gerät, mit einer im Betrieb fluiddurchströmten Baugruppe, die aus mehreren in einer Aufreihungsrichtung entlang einer Aufreihungsachse hintereinander anordenbaren, mittels einer Verbindungseinrichtung miteinander verbindbaren Baugruppenmodulen aufgebaut ist, wobei die Verbindungseinrichtung sich axial zur Aufreihungsachse erstreckende Verbindungskörper-Aufnahmen besitzt, von denen wenigstens eine an jedem Baugruppenmodul vorgesehen ist, und Verbindungskörper aufweist, die in die Verbindungskörper-Aufnahmen einsetzbar sind und jeweils benachbarte Baugruppenmodule miteinander verbinden, wobei sich die Verbindungskörper jeweils im eingesetzten Zustand übereinander zugeordnete, zueinander ausgerichtete Verbindungskörper-Aufnahmen benachbarter Baugruppenmodule erstrecken, und wobei die Verbindungseinrichtung Spannelemente aufweist, die jeweils einem der Verbindungskörper zugeordnet, quer zur Aufreihungsachse, von einer Bedienseite des betreffenden Baugruppenmoduls aus betätigbar und zwischen einer benachbarte Baugruppenmodule freigebenden Freigabestellung und einer benachbarte Baugruppenmodule aneinander spannende Spannstellung bewegbar ist, wobei der zugeordnete Verbindungskörper in den Spannstellung an einer Beaufschlagungsstelle mit einer quer zur Aufreihungsachse wirkenden Querkraft beaufschlagt ist.

Aus der EP 1 026 430 A2 ist ein derartiges fluidtechnisches Gerät bekannt, wobei die Verbindungskörper hier jeweils einen Gewindeabschnitt aufweisen, der in eine am zugeordneten Baugruppenmodul ausgebildeten Gewindebohrung einschraubbar ist. Das dem Gewindeabschnitt gegenüberliegende Ende des Verbindungskörpers taucht in eine jeweilige Verbindungskörper-Aufnahme des benachbarten Baugruppenmoduls ein, wobei von einer Bedienseite des zugeordneten Baugruppenmoduls aus bedienbare Spannelemente vorgesehen sind, um die benachbarten Baugruppenmodule aneinander zu spannen. Der dem Gewindeabschnitt gegenüberliegende Abschnitt des Verbindungskörpers ist an den Durchmesser der Verbindungskörper-Aufnahme angepasst, wodurch der Verbindungskörper passgenau in der zugeordneten Aufnahme sitzt. Durch den passgenauen Sitz des Verbindungskörpers erfolgt eine Abstützung an der Innenwand der Verbindungskörper-Aufnahme, falls das zugeordnete Spannelement am Verbindungskörper angreift und eine Querkraft eingeleitet wird.

Der in die Verbindungskörper-Aufnahme des benachbarten Baugruppenmoduls eintauchende Abschnitt des Verbindungskörpers muss wie erwähnt relativ passgenau an dem Durchmesser der Verbindungskörper-Aufnahme angepasst werden, damit eine wirksame Abstützung und ein wirksames Auffangen der durch das zugeordnete Spannelement eingeleiteten Querkraft erfolgen kann.

Aufgabe der Erfindung ist es, ein fluidtechnisches Gerät der eingangs erwähnten Art zu schaffen, dessen Module zuverlässig, schnell und mit kostengünstigen Verbindungskomponenten zusammengebaut und dabei mit relativ hoher Klemmkraft miteinander verspannt werden können.

Diese Aufgabe wird durch ein fluidtechnisches Gerät mit den Merkmalen des unabhängigen Anspruchs 1 gelöst. Weiterbildungen der Erfindung sind in den Unteransprüchen dargestellt.

Das erfindungsgemäße fluidtechnische Gerät zeichnet sich dadurch aus, dass den Verbindungskörpern in der Nähe der Beaufschlagungsstelle jeweils getrennt von einer Innenwand der Verbindungskörper-Aufnahme ausgebildete, sich an der Innenwand abstützende, jeweils mit dem zugeordneten Verbindungskörper lösbar verbindbare Abstützmittel zum Auffangen der durch das Spannelement eingeleiteten Querkraft zugeordnet sind.

Die Abstützmittel sind also bauteilmäßig von der Innenwand der Verbindungskörper-Aufnahme getrennt ausgebildet. Sie können mit dem betreffenden Verbindungskörper in einfacher Weise, insbesondere schnell lösbar verbunden werden. Im Gegensatz zum vorstehend erwähnten Stand der Technik ist es nicht notwendig, den Teil bzw. Abschnitt des Verbindungskörpers, der in die Verbindungskörper-Aufnahme des benachbarten Baugruppenmoduls eintaucht, an den Durchmesser dieser Verbindungskörper-Aufnahme anzupassen. Die Verbindungskörper können daher kleiner als die aus dem Stand der Technik bekannten dimensioniert werden, wobei trotzdem eine zuverlässige Abstützung an der Innenwand der Verbindungskörper-Aufnahme über die Abstützmittel stattfindet.

Bei einer Weiterbildung der Erfindung weisen die Abstützmittel jeweils einen sich an der Innenwand der Verbindungskörper-Aufnahme abstützenden Ringabschnitt mit einer Aufnahmeöffnung auf, in die der Endabschnitt des zugeordneten Verbindungskörpers in dessen eingesetzten Zustand eintaucht. Alternativ wäre es auch denkbar, dass der Endabschnitt eines jeweiligen Verbindungskörpers mit einer Ausnehmung versehen ist, die mit einem stiftartigen Fortsatz der Abstützmittel verbunden werden kann.

Es ist möglich, dass die Abstützmittel von gegenüber den Verbindungskörper separat ausgebildeten, in die Verbindungskörper-Aufnahmen einsetzbaren Bauteilen gebildet sind. Beispielsweise eignen sich hierzu Abstützhülsen.

In besonders bevorzugter Weise werden die Abstützmittel jedoch jeweils von einen am Verbindungskörper selber ausgebildeten Abstützabschnitt gebildet, mit dem ein benachbarter Verbindungskörper im eingesetzten Zustand lösbar verbunden ist. Benachbarte Verbindungskörper können also miteinander verbunden werden, wodurch sich diese gegenseitig abstützen können. Zweckmäßigerweise ist der Abstützabschnitt des Verbindungskörpers als Ringabschnitt mit Aufnahmeöffnung ausgestaltet. Wie vorstehend erwähnt, könnte der Abstützabschnitt jedoch alternativ auch mit einem stiftartigen Fortsatz versehen sein.

Bei einer Weiterbildung der Erfindung ist die Beaufschlagungsstelle eines jeweiligen Verbindungskörpers derart ausgebildet, dass bei einer Spannbewegung des Spannelementes von der Freigabestellung in die Spannstellung eine Relativbewegung des Verbindungskörpers gegenüber der zugeordneten Verbindungskörper-Aufnahme des benachbarten Baugruppenmoduls, in die der Verbindungskörper eintaucht, stattfindet, derart, dass benachbarte Baugruppenmodule aufeinander gespannt werden.

In besonders bevorzugter Weise ist die Beaufschlagungsstelle als an der Außenfläche des Verbindungskörpers umlaufende ringförmige Nut mit V-artigem Querschnitt ausgestaltet, die mit einem am Spannelement ausgebildeten, in die Nut eintauchbaren, konusartigen Beaufschlagungsabschnitt zusammenwirkt, wobei eine durch einen Nutgrund der Nut verlaufende Umfangsachse versetzt zu einer Längsachse des Spannelementes ausgestaltet ist. Das Spannelement sitzt also exzentrisch.zur Nut, wodurch beim Spannvorgang die korrespondierende Konusflächen an der Nut und am Beaufschlagungsabschnitt des Spannelementes aufeinander abgleiten können, wodurch eine Bewegung des Verbindungskörpers axial zur Aufreihungsachse erzeugt wird, die letztendlich zu einer Verspannung benachbarter Baugruppenmodule führt.

Bei einer Weiterbildung der Erfindung sind die Verbindungskörper jeweils als in die zugeordnete Verbindungskörper-Aufnahme einsteckbare Steckbauteile ausgebildet, wobei Anschlagmittel zur Vorgabe einer bestimmten Einstecktiefe in die zugeordnete Verbindungskörper-Aufnahme vorgesehen sind. Im Gegensatz zum vorstehend erwähnten Stand der Technik, bei dem die Verbindungskörper eingeschraubt werden, sind solche, als Steckbauteile ausgebildeten Verbindungskörper kostengünstiger herstellbar und schneller montierbar.

Besonders bevorzugt sind die Anschlagmittel von einer am Ringabschnitt eines jeweiligen Verbindungskörpers ausgebildeten und von einer von der Innenwand der Verbindungskörper-Aufnahme nach radial innen springendem Gegen-Anschlagfläche gebildet.

Bei einer Weiterbildung der Erfindung weist der Verbindungskörper jeweils den Ringabschnitt, einen daran anschließenden, demgegenüber verjüngten, die Beaufschlagungsstelle aufweisenden Mittelabschnitt und den daran anschließenden, demgegenüber verjüngten, in die Aufnahmeöffnung des Ringabschnitts des benachbarten Verbindungskörpers eintauchenden Endabschnitt auf.

Bevorzugte Ausführungsbeispiele der Erfindung sind in der Zeichnung dargestellt und werden im Folgenden näher erläutert. In der Zeichnung zeigen:
- Fig. 1: eine perspektivische Darstellung eines ersten Ausführungsbeispiels des erfindungsgemäßen fluidtechnischen Geräts bei der Montage,
- Fig. 2: eine Vorderansicht des fluidtechnischen Geräts von Fig. 1 und
- Fig. 3: einen Querschnitt durch das fluidtechnische Gerät entlang der Linie III-III von Fig. 1, wobei in strichlinierter Darstellung ein zweites Ausführungsbeispiel des fluidtechnischen Geräts dargestellt ist.

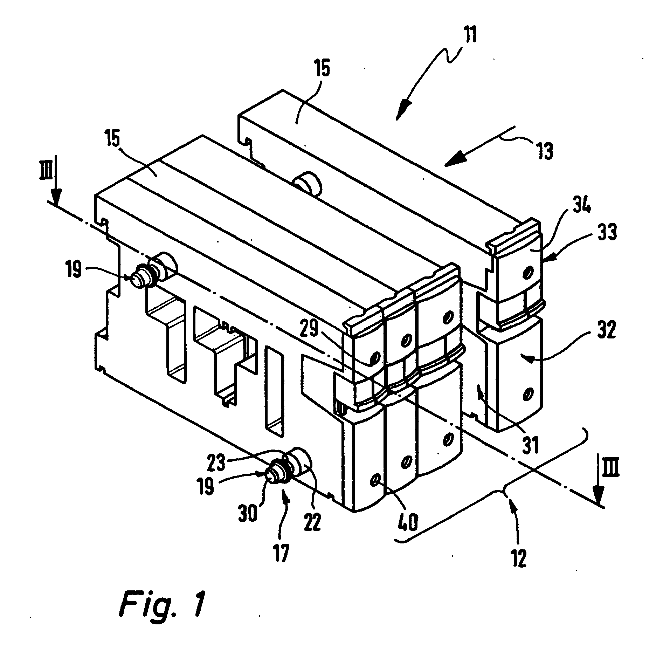

Die Figuren 1 bis 3 zeigen bevorzugt die Ausführungsbeispiele des erfindungsgemäßen fluidtechnischen Geräts 11, dessen Hauptbestandteil eine im Betrieb fluiddurchströmte Baugruppe 12 bildet. Die Baugruppe 12 besteht aus mehreren, in einer Aufreihungsrichtung 13 entlang einer Aufreihungsachse 14 hintereinander anordenbaren, plattenartigen Baugruppenmodulen 15.

Die Baugruppe 12 ist beispielhaft anhand einer Ventilanordnung dargestellt, die aus mehreren, modulartigen, hintereinander angeordneten Ventilplatten aufgebaut ist. Den Abschluss der Ventilanordnung kann eine Endplatte (nicht dargestellt) bilden, die mehrere Anschlussöffnungen zum Anschluss nicht näher dargestellter, weiterführende Druckmittelleitungen aufweist. Über die Druckmittelleitungen wird das zum Betrieb benötigte Druckmittel, beispielsweise Druckluft zu- und/oder abgeführt.

Wie insbesondere in Fig. 1 dargestellt, können als Ventilplatten sogenannte Vollplatten-Ventilscheiben eingesetzt werben, in die jeweils ein nicht näher dargestellter Hauptventil integriert ist.

Zur Verbindung benachbarter Baugruppenmodule 15 ist eine Verbindungseinrichtung 17 vorgesehen, die sich axial zur Aufreihungsachse 14 erstreckende Verbindungskörper-Aufnahmen 18 besitzt, von denen wenigstens eine an jedem Baugruppenmodul 15 vorgesehen ist. Die Verbindungskörper-Aufnahmen 18 sind jeweils als durch die Baugruppenmodule 15 hindurchgehende Durchgangslöcher ausgestaltet. Wie beispielhaft in Fig. 1 dargestellt, können sich an einem Baugruppenmodul 15 mehrere Verbindungskörper-Aufnahmen 18 befinden, beispielsweise zwei sich bezüglich einer in Aufreihungsrichtung 13 sich erstrekkenden Mittellängsachse des Baugruppenmoduls 15 diametral gegenüberliegende Verbindungskörper-Aufnahmen 18. Die Verbindungskörper-Aufnahmen 18 dienen zur Aufnahme von Verbindungskörpern 19, die sich jeweils im eingesetzten Zustand über einander zugeordnete, zueinander ausgerichtete Verbindungskörper-Aufnahmen 18 benachbarter Baugruppenmodule 15 erstrekken.

Die Verbindungskörper 19 sind jeweils nach Art eines zylindrischen Bolzen ausgestaltet und besitzen einen Ringabschnitt 20, an dessen Stirnseite sich eine insbesondere zylindrische Aufnahmeöffnung 21 befindet. An den Ringabschnitt 20 schließt sich einstückig ein demgegenüber verjüngter Mittelabschnitt 22 an. Im Bereich des vom Ringabschnitt 20 entfernten Endes des Mittelabschnitts 22, insbesondere in vom Ringabschnitt 20 entfernten letzten Drittel des Mittelabschnitts 22, befindet sich eine Beaufschlagungsstelle 23 in Form einer an der Außenflächen des Mittelabschnitts 22 umlaufenden ringförmigen Nut mit V-artigem Querschnitt. Die V-Nut besitzt eine durch eine Nutgrund 24 verlaufende Umfangsachse 25. An den Mittelabschnitt 22 schließt sich noch einstückig ein Endabschnitt 30 an, der gegenüber dem Mittelabschnitt 22 verjüngt ist.

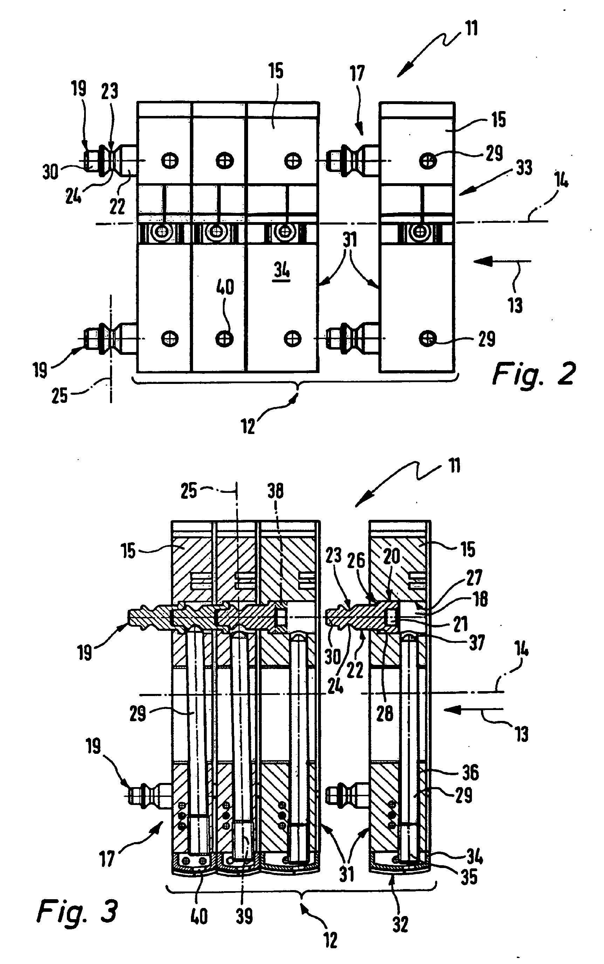

Wie insbesondere in Fig. 3 dargestellt, sind die Verbindungskörper 19 jeweils als in die zugeordnete Verbindungskörper-Aufnahme 18 einsteckbare Steckbauteile ausgebildet, wobei Anschlagmittel zur Vorgabe einer bestimmten Einstecktiefe in die zugeordnete Verbindungskörper-Aufnahme 18 vorgesehen sind. Als Anschlagmittel dienen eine an der, der Stirnseite des Ringabschnitts 20 gegenüberliegenden Seite ausgebildete ringförmige Anschlagfläche 26 und eine von einer Innenwand 27 der Verbindungskörper-Aufnahme 18 nach radial innen springende Gegen-Anschlagfläche 28. Der Ringabschnitt 20 des Verbindungskörpers 19 ist an den Durchmesser der Verbindungskörper-Aufnahme 18 angepasst. Der Verbindungskörper 19 sitzt also mit seinem Ringabschnitt 20 innerhalb der zugeordneten Verbindungskörper-Aufnahme 18 und schlägt mit seiner Anschlagfläche 26 an der Gegen-Anschlagfläche 28 an, wobei ein Teil des Mittelabschnitts 22 samt der Beaufschlagungsstelle 23 und der Endabschnitt 30 über eine Fügefläche 31 des Baugruppenmoduls 15 hinausstehen. Dieser überstehende Teil des Verbindungskörpers 19 ist dann im zusammengefügten Zustand zweier zugeordneter Baugruppenmodule 15 in die Verbindungskörper-Aufnahme 18 des benachbarten Baugruppenmoduls 15 eingetaucht.

Die Verbindungseinrichtung 17 besitzt ferner Spannelemente 29 die jeweils einem der Verbindungskörper 19 zugeordnet, quer zur Aufreihungsachse 14 ausgerichtet, von einer Bedienseite 32 des betreffenden Baugruppenmoduls 15 aus betätigbar und zwischen einer benachbarte Baugruppenmodule 15 freigebenden Freigabestellung und einer benachbarte Baugruppenmodule 15 aneinander spannenden Spannstellung bewegbar sind. Die Spannelemente 29 sind hier beispielhaft in Form von länglichen Spannspindeln dargestellt, die in einer im Wesentlichen senkrecht zur Aufreihungsachse 14 verlaufenden Spindelaufnahme 36 zwischen der Freigabestellung und der Spannstellung beweglich geführt sind. Wie insbesondere in Fig. 1 dargestellt, besitzt ein jeweiliges als Ventilplatte ausgebildetes Baugruppenmodul 15 eine Handhilfsbetätigungseinrichtung 33, mit der ein Schaltvorgang des zugeordneten Hauptventils unter Umgehung des wenigstens einen zugeordneten Vorsteuerventils (nicht dargestellt) möglich ist. Die Handhilfsbetätigungseinrichtüng 33 besitzt eine Abdeckblende 34, die die Stirnseite eines jeweiligen Baugruppenmoduls 15 abdeckt. In dieser Abdeckblende 34 sind Montageöffnungen 40 vorgesehen, durch die, wie in Fig. 3 dargestellt, ein geeignetes Werkzeug, beispielsweise ein Mehrkant-Schlüssel, hindurchgeführt werden kann, um das gewünschte spindelförmige Spannelement 29 zu betätigen. Das Spannelement 29 besitzt hierzu einen Betätigungsabschnitt 35, in dem sich beispielsweise eine Mehrkant-Ausnehmung für einen Mehrkant-Schlüssel befinden kann. Am anderen Ende des Spannelementes 29 befindet sich ein Beaufschlagungsabschnitt 37, der eine konusartige Gestalt besitzt und mit der ringförmigen Nut am Verbindungskörper 19 zusammenwirkt. Die Mittelachse 39 des Spannelementes 29 liegt versetzt zur Umfangsachse 25 der V-artigen Nut. Wie insbesondere in Fig. 3 dargestellt, sind komplementäre Konusflächen an der V-artigen Nut und an dem Beaufschlagungsabschnitt 37 des Spannelementes 29 vorgesehen, die beim Bewegen des Spannelementes 29 in seine Spannstellung aufeinander abgleiten können.

Den Verbindungskörpern 19 ist ferner in der Nähe der Beaufschlagungsstelle 23 jeweils getrennt von der Innenwand 27 der Verbindungskörper-Aufnahme 18 ausgebildete, sich an der Innenwand 27 abstützende, jeweils mit dem zugeordneten Verbindungskörper 19 lösbar verbindbare Abstützmittel zum Auffangen der durch das Spannelement 29 eingeleiteten Querkraft bei seiner Bewegung in die Spannstellung zugeordnet. Gemäß erstem Ausführungsbeispiel des erfindungsgemäßen fluidtechnischen Geräts 11 werden die Abstützmittel jeweils von einem am Verbindungskörper 19 selber ausgebildeten Abstützabschnitt gebildet, mit dem ein benachbarter Verbindungskörper 19 im eingesetzten Zustand lösbar verbunden ist. Als Abstützabschnitt dient hierbei der Ringabschnitt 20 mit der Aufnahmeöffnung 21 am jeweiligen Verbindungskörper 19. Wie insbesondere in Fig. 3 dargestellt, kann also der Endabschnitt 30 eines jeweiligen Verbindungskörpers 19 in die Aufnahmeöffnung 21 am Ringabschnitt 20 des in Aufreihungsrichtung 13 benachbarte nachgeordneten Verbindungskörpers 19 eingesteckt werden.

In Fig. 3 ist ebenfalls ein zweites Ausführungsbeispiel des erfindungsgemäßen fluidtechnischen Geräts 11 in strichlinierter Darstellung dargestellt, wobei die Abstützmittel hier von gegenüber den Verbindungskörpern 19 separat ausgebildeten, in die Verbindungskörper-Aufnahmen 18 einsetzbaren Bauteilen gebildet sind. Dies ist beispielhaft anhand einer Abstützhülse 38 gezeigt, die an einen Kopfabschnitt des Verbindungskörpers, der bei diesem Ausführungsbeispiel ohne Aufnahmeöffnung ausgebildet sein kann, angrenzt.

Beim Zusammenfügen der Baugruppenmodule 15 zu einer Baugruppe 12 werden zunächst die Baugruppenmodule 15 jeweils mit Verbindungskörpern 19 bestückt, die in einfacher Weise in die zugeordneten Verbindungskörper-Aufnahmen 18 eingesteckt werden, wobei die Einstecktiefe über den Anschlag der Anschlagfläche 26 an die Gegen-Anschlagfläche 28 in der Verbindungskörper-Aufnahme 18 vorgegeben wird. Wie erwähnt sind zwei diametral gegenüberliegende Verbindungskörper-Aufnahmen 18 vorgesehen, die jeweils mit Verbindungskörpern 19 bestückt werden, wodurch eine Verdrehung benachbarter Baugruppenmodule 15 um die Aufreihungsachse 14 verhindert ist. Die Verbindungskörper 19 stehen jeweils mit einem Teil ihres Mittelabschnitts 22 und dem Endabschnitt 30 über die Fügefläche 31 des zugeordneten Baugruppenmoduls 15 hinaus, wobei dieser überstehende Teil in die Verbindungskörper-Aufnahme 18 des benachbarten Baugruppenmoduls 15 eingesteckt wird. Dabei tauchen die Endabschnitte 30 der Verbindungskörper 19 jeweils in die Aufnahmeöffnung 21 des im benachbarten Baugruppenmodul 15 bereits befindlichen Verbindungskörpers 19 ein. Die Verbindungskörper 19 werden also sozusagen ineinander gesteckt. Benachbarte Baugruppenmodule 15 sind nun miteinander verbunden.

Zur Sicherung und zum Spannen der Baugruppenmodule 15 aneinander dienen die Spannelemente 29. Dabei wird ein geeignetes Handhabungswerkzeug, beispielsweise ein Mehrkant-Schlüssel, über die Montageöffnung 40 an der Bedienseite des jeweiligen Baugruppenmoduls 15 eingeführt und das zugeordnete Spannelement 29 betätigt. Das spindelförmige Spannelement 29 wird dann aus seiner Freigabestellung in Richtung seiner Spannstellung gedreht, wobei die zueinander-komplementären Konusflächen am Beaufschlagungsabschnitt 37 des Spannelementes 29 und an der V-artigen Fluidnut aneinander abgleiten, wodurch der Verbindungskörper 19 relativ zur Verbindungskörper-Aufnahme 18 in Richtung der Aufreihungsachse 14 bewegt wird. Über den Anschlag zwischen der Anschlagfläche 26 des Verbindungskörper 19 und der Gegen-Anschlagfläche 28 am vorgeordneten Baugruppenmodul 15 wird das vorgeordnete Baugruppenmodul 15 auf das Baugruppenmodul 15 gespannt, an dem die Spanneinleitung erfolgt. Die benachbarten Baugruppenmodule 15 sind nun miteinander verspannt. Beim Verspannen wird durch das Spannelement 29 eine im Wesentlichen senkrecht zur Aufreihungsachse 14 wirkende Querkraft auf die Verbindungskörper 19 eingeleitet. Ohne Abstützmittel würden die Verbindungskörper 19 dieser Querkraft ausweichen und würden sich in Folge des gegenüber dem Durchmesser der Verbindungskörper-Aufnahme 18 kleineren Durchmessers in der Verbindungskörper-Aufnahme 18 schräg stellen. Um dies zu verhindern und die Querkräfte aufzufangen sind die Abstützmittel vorgesehen, die wie erwähnt, durch den Ringabschnitt 20 mit Aufnahmeöffnung 21 eines benachbarten Verbindungskörpers 19 gebildet werden. Der Endbereich des Verbindungskörpers 19 sitzt also in der Aufnahmeöffnung 21, wobei sich der Ringabschnitt 20 an der Innenwand 27 der Verbindungskörper-Aufnahme 18 abstützt. Dadurch wird eine die Querkraft aufnehmende Abstützwirkung erzielt.

## Patentansprüche

1. Fluidtechnisches Gerät, mit einer im Betrieb fluiddurchströmten Baugruppe (12), die aus mehreren in einer Aufreihungsrichtung (13) entlang einer Aufreihungsachse (14) hintereinander anordenbaren, mittels einer Verbindungseinrichtung (17) miteinander verbindbaren Baugruppenmodulen (15) aufgebaut ist, wobei die Verbindungseinrichtung (17) sich axial zur Aufreihungsachse (14) erstreckende Verbindungskörper-Aufnahmen (18) besitzt, von denen wenigstens eine an jedem Baugruppenmodul (15) vorgesehen ist, und Verbindungskörper (19) aufweist, die in die Verbindungskörper-Aufnahmen (18) einsetzbar sind und jeweils benachbarte Baugruppenmodule (15) miteinander verbinden, wobei sich die Verbindungskörper (19) jeweils im eingesetzten Zustand über einander zugeordnete, zueinander ausgerichtete Verbindungskörper-Aufnahmen (18) benachbarter Baugruppenmodule (15) erstrecken, und wobei die Verbindungseinrichtung (17) Spannelemente (29) aufweist, die jeweils einem der Verbindungskörper (19) zugeordnet, quer zur Aufreihungsachse (14) ausgerichtet, von einer Bedienseite des betreffenden Baugruppenmoduls (15) aus betätigbar und zwischen einer benachbarte Baugruppenmodule (15) freigebenden Freigabestellung und einer benachbarte Baugruppenmodule (15) aneinander spannenden Spannstellung bewegbar sind, wobei der zugeordnete Verbindungskörper (19) in der Spannstellung an einer Beaufschlagungsstelle (23) mit einer quer zur Aufreihungsachse (14) wirkenden Querkraft beaufschlagt ist, **dadurch gekennzeichnet, dass** den Verbindungskörpern (19) in der Nähe der Beaufschlagungsstelle (23) jeweils getrennt von einer Innenwand (27) der Verbindungskörper-Aufnahme (18) ausgebildete, sich an der Innenwand (27) abstützende, jeweils mit dem zugeordnete Verbindungskörper (19) lösbar verbindbare Abstützmittel zum Auffangen der durch das Spannelement (29) eingeleiteten Querkraft zugeordnet sind.

2. Gerät nach Anspruch 1, **dadurch gekennzeichnet, dass** die Abstützmittel jeweils einen sich an der Innenwand (27) abstützenden Ringabschnitt (20) mit einer Aufnahmeöffnung (21) aufweisen, in die ein Endabschnitt (30) des zugeordneten Verbindungskörpers (19) in dessen eingesetzten Zustand eintaucht.

3. Gerät nach Anspruch 1 oder 2, **dadurch gekennzeichnet, dass** die Abstützmittel von gegenüber den Verbindungskörpern (19) separat ausgebildeten, in die Verbindungskörper - Aufnahmen (18) einsetzbaren Bauteilen gebildet sind.

4. Gerät nach Anspruch 1 oder 2, **dadurch gekennzeichnet, dass** die Abstützmittel jeweils von einem am Verbindungskörper (19) selber ausgebildeten Abstützabschnitt gebildet sind, mit dem ein benachbarter Verbindungskörper (19) im eingesetzten Zustand lösbar verbunden ist.

5. Gerät nach Anspruch 4, **dadurch gekennzeichnet, dass** der Abstützabschnitt des Verbindungskörpers (19) als Ringabschnitt (20) mit Aufnahmeöffnung (21) ausgestaltet ist.

6. Gerät nach einem der vorhergehenden Ansprüche, **dadurch gekennzeichnet, dass** die Beaufschlagungsstelle (23) eines jeweiligen Verbindungskörpers (19) derart ausgebildet ist, dass bei einer Spannbewegung des Spannelementes (29) von der Freigabestellung in die Spannstellung eine Relativbewegung des Verbindungskörpers (19) gegenüber der zugeordneten Verbindungskörper-Aufnahme (18) des benachbarten Baugruppenmoduls (15), in die der Verbindungskörper (19) eintaucht, stattfindet, derart, dass benachbarte Baugruppenmodule (15) aufeinander gespannt werden.

7. Gerät nach Anspruch 6, **dadurch gekennzeichnet, dass** die Beaufschlagungsstelle (23) als an der Außenfläche des Verbindungskörpers (19) umlaufende ringförmige Nut mit V-artigem Querschnitt ausgestaltet ist, die mit einem am Spannelement (29) ausgebildeten, in die Nut eintauchbaren, konusartigen Beaufschlagungsabschnitt (37) zusammenwirkt, wobei eine durch einen Nutgrund (24) verlaufende Umfangsachse (25) versetzt zu einer Mittelachse (22) des Spannelementes (29) liegt.

8. Gerät nach einem der vorhergehenden Ansprüche, **dadurch gekennzeichnet, dass** die Verbindungskörper (19) jeweils als in die zugeordnete Verbindungskörper-Aufnahme (18) einsteckbare Steckbauteile ausgebildet sind, wobei Anschlagmittel zur Vorgabe einer bestimmten Einstecktiefe in die zugeordnete Verbindungskörper-Aufnahme (18) vorgesehen sind.

9. Gerät nach Anspruch 8, **dadurch gekennzeichnet, dass** die Anschlagmittel von einer am Ringabschnitt (20) eines jeweiligen Verbindungskörpers (19) ausgebildeten Anschlagfläche (26) und von einer von der Innenwand (27) der Verbindungskörper-Aufnahme (18) nach radial innen springenden Gegen-Anschlagfläche (28) gebildet sind.

10. Gerät nach einem der Ansprüche 2 bis 9, **dadurch gekennzeichnet, dass** die Verbindungskörper (19) jeweils den Ringabschnitt (20), einen daran anschließenden, demgegenüber verjüngten, die Beaufschlagungsstelle (23) aufweisenden Mittelabschnitt (22) und den daran anschließenden, demgegenüber verjüngter, in die Aufnahmeöffnung (21) des Ringabschnitts (20) des benachbarten Verbindungskörpers (19) eintauchenden Endabschnitt (30) aufweisen.

## Claims

1. Fluidic device, with a sub-assembly (12) through which fluid flows in operation, built up of several sub-assembly modules (15) which may be mounted one behind the other in a direction of lining-up (13) along an axis of lining-up (14) and connected to one another by means of a connecting device (17), wherein the connecting device (17) has connecting body locations (18) extending axially to the axis of lining-up (14), of which at least one is provided for each sub-assembly module (15), and has connecting bodies (19) which may be inserted in the connecting body locations (18) and connect respectively adjacent sub-assembly modules (15) to one another, wherein the connecting bodies (19) in the inserted state extend over connecting body locations (18) of adjacent sub-assembly modules (15) which are assigned and aligned to one another, and wherein the connecting device (17) has clamping elements (29), each assigned to one of the connecting bodies (19) and aligned at right-angles to the axis of lining-up (14), and actuable from an operating side of the relevant sub-assembly module (15) and which may be moved between a release position releasing an adjacent sub-assembly module (15) and a clamping position in which adjacent sub-assembly modules (15) are clamped to one another, wherein the assigned connecting body (19) in the clamping position is pressure-loaded by a lateral force acting at right-angles to the axis of lining-up (14), **characterised in that** the connecting bodies (19) are assigned in the vicinity of the pressure-loading point (23) support means, each separated from an inside wall (27) of the connecting body location (18), resting on the inside wall (27) and each releasably connectable to the assigned connecting body (19), to absorb the lateral force initiated by the clamping element (29).

2. Device according to claim 1, **characterised in that** the support means each have a a ring section (20) resting on the inside wall (27) with a locating hole (21) into which an end section (30) of the assigned connecting body (19) dips in its inserted state.

3. Device according to claim 1 or 2, **characterised in that** the support means are formed by components which are separate from the connecting body (19) and may be inserted into the connecting body locations (18).

4. Device according to claim 1 or 2, **characterised in that** the support means are each formed by a support section formed on the connecting body (19) itself and to which an adjacent connecting body (19) is connected releasably in the inserted state.

5. Device according to claim 4, **characterised in that** the support section of the connecting body (19) is designed as a ring section (20) with locating hole (21).

6. Device according to any of the preceding claims, **characterised in that** the pressure-loading point (23) of each connecting body (19) is so designed that, during a clamping movement of the clamping elements (29) from the release position into the clamping position, a relative movement of the connecting body (19) takes place relative to the assigned connecting body location (18) of the adjacent sub-assembly module (15) into which the connecting body (19) dips, in such a way that adjacent sub-assembly modules (15) are clamped together.

7. Device according to claim 6, **characterised in that** the pressure-loading point (23) is in the form of an annular slot with V-shaped cross-section running around the outer surface of the connecting body (19) and acting in conjunction with a conical pressure-loading section (37) formed on the clamping elements (29) and able to dip into the slot, wherein a circumferential axis (25) running through a slot base (24) lies offset to a centre axis (22) of the clamping element (29).

8. Device according to any of the preceding claims, **characterised in that** the connecting bodies (19) are each designed as plug-in components which may be plugged into the assigned connecting body location (18), wherein stop means are provided to preset a specific depth of insertion into the assigned connecting body location (18).

9. Device according to claim 8, **characterised in that** the stop means are formed by a stop face (26) formed on the ring section (20) of each connecting body (19) and a mating stop face (28) springing radially inwards from the inside wall (27) of the connecting body location (18).

10. Device according to any of claims 2 to 9, **characterised in that** each of the connecting bodies (19) has the ring section (20), an adjoining centre section (22) with the pressure-loading point (23) and tapering relative to the former, and the adjoining end section (30), tapering relative to the former and dipping into the locating hole (21) of the ring section (20) of the adjacent connecting body (19).

## Revendications

1. Appareil technique des fluides, comportant un sous-groupe (12) traversé en fonctionnement par des fluides, qui est construit à partir de plusieurs modules de sous-groupe (15) pouvant être disposés les uns derrière les autres dans une direction d'alignement (13) le long d'un axe d'alignement (14), pouvant être reliés entre eux au moyen d'un dispositif d'assemblage (17), le dispositif d'assemblage (17) comportant des logements de corps d'assemblage (18) s'étendant de manière axiale par rapport à l'axe d'alignement (14), parmi lesquels au moins un logement est prévu sur chaque module de sous-groupe (15) et présente des corps d'assemblage (19), qui peuvent être insérés dans les logements de corps d'assemblage (18) et qui relient entre eux des modules de sous-groupe (15) respectivement adjacents, les corps d'assemblage (19) s'étendant respectivement à l'état inséré au-dessus des logements de corps d'assemblage (18) des modules de sous-groupe (15) adjacents, associés les uns aux autres et orientés les uns par rapport aux autres, et le dispositif d'assemblage (17) présentant des éléments de serrage (29), qui sont associés respectivement à l'un des corps d'assemblage (19), qui sont orientés de manière transversale par rapport à l'axe d'alignement (14), qui peuvent être actionnés à partir d'un côté de commande du module de sous-groupe (15) concerné et qui peuvent être déplacés entre une position de libération libérant des modules de sous-groupe (15) adjacents et une position de serrage serrant les uns contre les autres des modules de sous-groupe (15) adjacents, le corps d'assemblage (19) associé étant soumis dans la position de serrage à un emplacement de sollicitation (23) à l'action d'une force transversale agissant de manière transversale par rapport à l'axe d'alignement (14), **caractérisé en ce que** des éléments d'appui servant à capter la force transversale introduite par l'élément de serrage (29), lesquels sont réalisés respectivement de manière séparée d'un paroi intérieure (27) du logement de corps d'assemblage (18), s'appuient contre la paroi intérieure (27) et peuvent être reliés respectivement de manière amovible au corps d'assemblage (19) associé, sont associés aux corps d'assemblage (19) à proximité de l'emplacement de sollicitation (23).

2. Appareil selon la revendication 1, **caractérisé en ce que** les moyens d'appui présentent respectivement une section annulaire (20) s'appuyant contre la paroi intérieure (27) et dotée d'une ouverture de réception (21), dans laquelle s'enfonce une section d'extrémité (30) du corps d'assemblage (19) associé dans son état inséré.

3. Appareil selon la revendication 1 ou 2, **caractérisé en ce que** les moyens d'appui sont formés par des composants réalisés de manière séparée par rapport aux corps d'assemblage (19) et pouvant être insérés dans les logements de corps d'assemblage (18).

4. Appareil selon la revendication 1 ou 2, **caractérisé en ce que** les moyens d'appui sont respectivement formés par une section d'appui réalisée elle-même sur le corps d'assemblage (19), à laquelle est relié de manière amovible un corps d'assemblage (19) adjacent à l'état inséré.

5. Appareil selon la revendication 4, **caractérisé en ce que** la section d'appui du corps d'assemblage (19) est configurée sous la forme d'une section annulaire (20) dotée d'une ouverture de logement (21).

6. Appareil selon l'une quelconque des revendications précédentes, **caractérisé en ce que** l'emplacement de sollicitation (23) d'un corps d'assemblage (19) respectif est réalisé de telle manière qu'en cas d'un mouvement de serrage de l'élément de serrage (29) depuis une position de libération dans la position de serrage, un mouvement relatif du corps d'assemblage (19) a lieu par rapport au logement de corps d'assemblage (18) associé du module de sous-groupe (15) adjacent, dans lequel s'enfonce le corps d'assemblage (19), de telle manière que des modules de sous-groupe (15) adjacents sont tendus les uns sur les autres.

7. Appareil selon la revendication 6, **caractérisé en ce que** l'emplacement de sollicitation (23) est configuré comme une rainure dotée d'une section transversale à la manière d'un V, de forme annulaire et périphérique sur la surface extérieure du corps d'assemblage (19), laquelle coopère avec une section de sollicitation (37) réalisée sur l'élément de serrage (29), pouvant s'enfoncer dans la rainure, de forme conique, un axe périphérique (25) s'étendant à travers une base de rainure (24) étant décalé par rapport à un axe médian (22) de l'élément de serrage (29).

8. Appareil selon l'une quelconque des revendications précédentes, **caractérisé en ce que** les corps d'assemblage (19) sont respectivement réalisés comme des composants à emboîtement pouvant être insérés dans le logement de corps d'assemblage (18) associé, des moyens de butée servant à prédéfinir une certaine profondeur d'insertion dans le logement de corps d'assemblage (18) associé étant prévus.

9. Appareil selon la revendication 8, **caractérisé en ce que** les moyens de butée sont formés par une surface de butée (26) réalisée sur la section annulaire (20) d'un corps d'assemblage (19) respectif et par une contre-surface de butée (28) faisant saillie vers l'intérieur radialement de la paroi intérieure (27) du logement de corps d'assemblage (18).

10. Appareil selon l'une quelconque des revendications 2 à 9, **caractérisé en ce que** les corps d'assemblage (19) présentent respectivement la section annulaire (20), une section médiane (22) raccordée à celle-ci, rétrécie par rapport à celle-ci, présentant l'emplacement de sollicitation (23) et la section d'extrémité (30) raccordée à celle-ci, rétrécie par rapport à celle-ci, s'enfonçant dans l'ouverture de réception (21) de la section annulaire (20) du corps d'assemblage (19) adjacent.
